# EUROPEAN PATENT SPECIFICATION

(11) **EP 1 378 953 B1**
(45) Date of publication and mention of the grant of the patent: **01.03.2006**
(21) Application number: 03014927.2
(22) Date of filing: 01.07.2003
(51) Int. Cl.: H01M 8/02

(54) **Polymer electrolyte fuel cell and production method of separator plate thereof**
Polymerelektrolytbrennstoffzelle und Produktionsmethode der Separatorplatte
Pile à combustible à électrolyte polymère et procédé de production de plaque de séparation

(30) Priority: 02.07.2002 JP 2002193103
(43) Date of publication of application: 07.01.2004
(73) Proprietor: MATSUSHITA ELECTRIC INDUSTRIAL CO., LTD., Kadoma-shi, Osaka 571-8501 (JP)
(72) Inventor: Shibata, Soichi, Hirakata-shi, Osaka 573-1149 (JP); Kusakabe, Hiroki, Sakai-shi, Osaka, 590-0113 (JP); Hatoh, Kazuhito, Osaka-shi, Osaka 536-0015 (JP); Hase, Nobuhiro, Mino-shi, Osaka 562-0041 (JP); Takeguchi, Shinsuke, Kadoma-shi, Osaka 571-0074 (JP); Kobayashi, Susumu, Ikoma-shi, Nara 630-0134 (JP); Ohara, Hideo, Katano-shi, Osaka 576-0016 (JP)
(74) Representative: TBK-Patent

(56) References cited:
- EP-A- 0 951 086
- WO-A-01/67532
- US-A- 5 846 668
- PATENT ABSTRACTS OF JAPAN vol. 2000, no. 14, 5 March 2001 (2001-03-05) -& JP 2000 331691 A (HONDA MOTOR CO LTD), 30 November 2000 (2000-11-30) -& US 6 524 735 B1 (SUZUKI MASAHARU ET AL) 25 February 2003 (2003-02-25)

## Description

The present invention relates to a fuel cell comprising a solid polymer electrolyte for use in portable power sources, power sources for electric vehicles, domestic cogeneration systems and the like, and particularly relates to an electrically conductive separator plate thereof.

A fuel cell comprising a solid polymer electrolyte electrochemically reacts a fuel gas containing hydrogen with an oxidant gas containing oxygen, such as air, to simultaneously generate electric power and heat. This fuel cell basically comprises a polymer electrolyte membrane for selectively transporting hydrogen ions, and a pair of electrodes sandwiching the polymer electrolyte membrane therebetween. The electrode comprises a catalyst layer mainly composed of a carbon powder carrying a platinum group metal catalyst and a diffusion layer formed on the outer surface of the catalyst layer and having both gas permeability and electronic conductivity.

In order to prevent the gas to be supplied to the electrode from leaking out or prevent the two kinds of gases from being mixed with each other, gas sealing members or gaskets are arranged on the periphery of the electrodes, with the polymer electrolyte membrane sandwiched therebetween. The sealing members or gaskets are, beforehand, integrally assembled with the electrodes and the polymer electrolyte membrane, and this is called MEA (electrolyte membrane-electrode assembly). Conductive separator plates are arranged on the outer sides of the MEA for mechanically fixing it and for electrically connecting adjacent MEAs with each other in series. In the position of each separator plate, which will be in contact with the MEA, a gas flow channel is formed for supplying a reactive gas to the electrode and for carrying away a generated gas and an excessive gas. Although the gas flow channel may be provided separately from the separator plate, a general manner is to provide grooves in the surface of the separator plate to serve as the gas flow channel.

For the purpose of supplying each gas to the grooves constituting the gas flow channel, through holes are provided in each of the separator plates where the gas flow channel is formed, for forming a gas communicating channel that communicates throughout the cell stack. This hole is referred to as a manifold aperture. Connection of the inlet and the outlet of the gas flow channel with the manifold aperture allows direct supply of each gas from the manifold aperture into the gas flow channel.

Since the fuel cell generates heat during operation, it needs cooling with cooling water or the like to be kept under favorable temperature conditions. Normally, a cooling section for flowing cooling water for every 1 to 3 cells is provided between the separator plates. It is often the case that a cooling water flow channel is provided on the rear surface of the separator plate to serve as the cooling section. A commonly-used cell stack is constituted by alternately stacking these MEAs, separator plates, and cooling sections to assemble a stack of 10 to 200 cells, sandwiching the stack with end plates via current collector plates and insulating plates, and then fixing it from the both ends with cramping bolts.

In such a solid polymer type fuel cell, the separator plate is required to have high conductivity and gas-tightness, and further have high corrosion resistance against an oxidation/reduction reaction of hydrogen/oxygen. For this reason, a conventional separator plate has usually been constituted by a carbon material, such as grassy carbon, and gas flow channels therein have been formed by cutting or grinding.

In recent years, however, there has been an attempt to produce a separator plate obtainable by molding process using a composite material of expanded graphite or graphite and a resin, or the like, in place of the conventionally-used carbon materials.

In the conventional method by cutting of a carbon plate, it has been difficult to reduce material cost for the carbon plate as well as cost for cutting the same. In the method using the above-mentioned composite material of expanded graphite or graphite and a resin, the following problem also lies. That is, in the molding by means of a mold, a raw material for the separator plate, as pressurized, gets into a gap between an upper mold and a lower mold, where the raw material is cooled and solidified. This forms an overflow part. Also in the method of processing the manifold aperture with the use of a processing machine, such as a mold or a drill, after the molding process, searing force between the processing machine and the material may form sag. This overflow part or sag part is usually termed burrs.

With the burrs formed in the part connecting the manifold aperture with the gas flow channel, the cross sectional area of the gas flow channel is narrowed by the burrs, and thereby the gas supply to the gas flow channel is prevented to cause deterioration in cell performance. Further, the burrs formed on the outlet side of the gas flow channel prevents water droplets, formed in the gas flow channel by condensation of water generated due to an electrode reaction, from being discharged out of the gas flow channel, and thereby clogging of the gas flow channel is induced to cause deterioration in cell performance.

For prevention of the above-mentioned deterioration in cell performance caused by the burrs, there is required a burr removal operation by cutting or grinding. However, the cost for this burr removal operation will be high because of the complex shape of the part connecting the manifold aperture with the gas flowing channel.

According to document JP 2000331691 (US-B1-6524735), there is disclosed a polymer electrolyte fuel cell, the separator plates of which are provided with manifold apertures into which gas flow channel passages merge by means of a curved surface. By means of such a design, it is possible to effectively reduce the pressure loss in the flow passage so that the fluid can be delivered uniformly and smoothly to the respective fuel cell units.

According to document WO-A1-0167532 (EP-A1-1265303), there is disclosed a further generic polymer electrolyte fuel cell being provided with a recess in which a plurality of parallel ribs are arranged for forming a gas flow channel which connects manifold apertures on the inlet and outlet sides of the cell. The manifold apertures are formed on the bottom of the recess.

A further document EP-A2-0951086 discloses a compact polymer electrolyte fuel cell comprising separator plates equipped with manifold ports and grooves for guiding gas.

In view of what was described above, it is the object of the present invention to provide a polymer electrolyte fuel cell and a method for producing a conductive separator plate for such a fuel cell in which an improved gas flow between the gas flow channel and the manifold aperture without obstruction is provided.

The object of the invention is achieved by a polymer electrolyte fuel cell according to claim 1 and the method for producing a conductive separator plate for a fuel cell according to claim 4. Preferable embodiments of the inventions are set forth in the sub-claims.

According to the present invention, the gas flow channel is not narrowed by burrs formed on the periphery of the manifold aperture so that influences of the burrs on the flows of a fuel gas and an oxidant gas can be suppressed. Further, the formed burrs can be readily removed. It is therefore possible to reduce cost for processing the separator plate.

While the novel features of the invention are set forth particularly in the appended claims, the invention, both as to organization and content, will be better understood and appreciated, along with other objects and features thereof, from the following detailed description taken in conjunction with the drawings.
FIG. 1 is a front view of the cathode side of a separator plate used in a reference example.
FIG. 2 is an expanded sectional view, taken along the line II-II of FIG. 1.
FIG. 3 is an expanded sectional view, taken along the line III-III of FIG. 1.
FIG. 4 is an oblique view of the vicinity of an inlet-side oxidant gas manifold aperture in the above-mentioned separator plate.
FIG. 5 is an expanded sectional view of the above-mentioned separator plate before the manifold aperture is punched out, taken along the line II-II of FIG. 1.
FIG. 6 is a sectional view showing production steps of a separator plate according to an example used in the present invention.
FIG. 7 is a sectional view showing production steps of a separator plate according to another example used in the present invention.
FIG. 8 is a sectional view showing production steps of a separator plate according to still another example used in the present invention.
FIG. 9 is a rear view of the separator plate of FIG. 1.
FIG. 10 is an expanded sectional view of a fuel cell stack, taken along the line XII-XII of FIG. 1
FIG. 11 is an expanded sectional view of a conventional separator plate, taken along a line corresponding to the line II-II of FIG 1.
FIG. 12 is an expanded sectional view of the conventional separator plate, taken along a line corresponding to the line III-III of FIG 1.

In the following, reference examples and examples explaining features of the present invention are described with reference to drawings. The structural drawings used here are intended to facilitate understanding of the present invention, and hence a relative size and positional relationship of each component are not necessarily accurate.

### Reference example

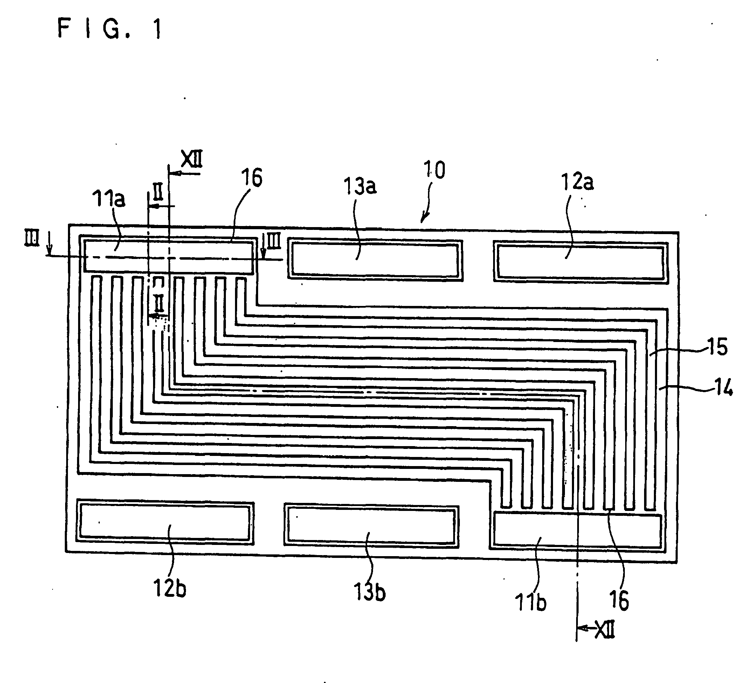

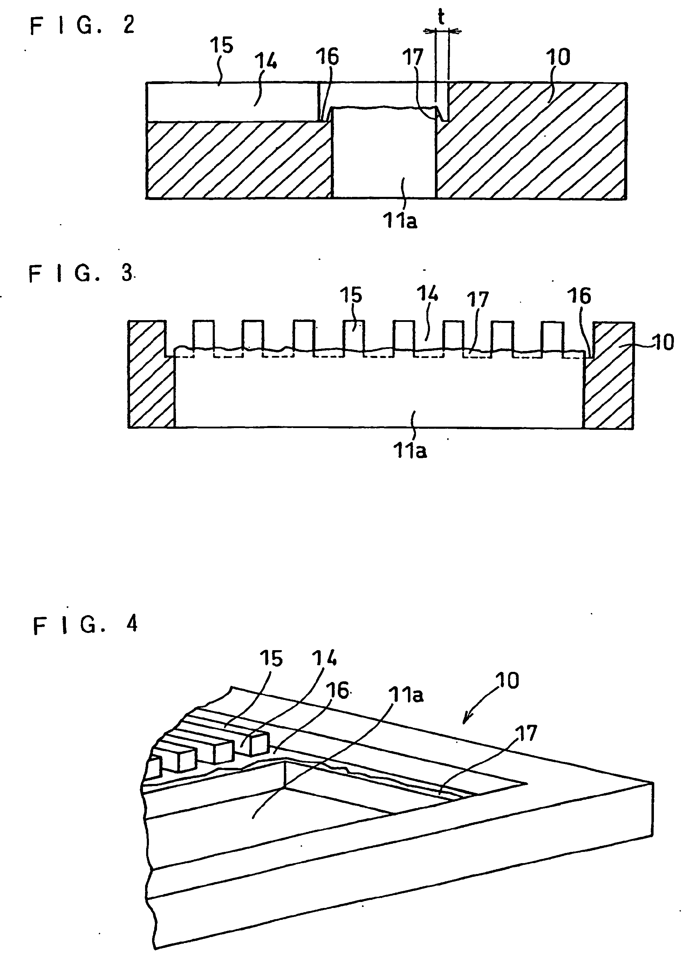

FIG. 1 is a front view of the cathode side of a separator plate of the present example. FIG. 2 is an expanded sectional view, taken along the line II-II of FIG. 1, and FIG. 3 is an expanded sectional view, taken along the line III-III of FIG. 1. FIG. 4 is an oblique view of the vicinity of an inlet-side manifold aperture in the separator plate.

This separator plate 10 is formed by molding a kneaded mixture of an artificial graphite powder, fibrous graphite and a thermosetting phenol resin, using a mold, and comprises a pair of oxidant gas manifold apertures 11a and 11b, a pair of fuel gas manifold apertures 12a and 12b, and a pair of cooling water manifold apertures 13a and 13b. The separator plate 10 further comprises, on the cathode side, an oxidant gas flow channel 14 for connecting the manifold aperture 11a with the manifold aperture 11b. As the gas flow channel 14 is formed by grooves in parallel with each other, ribs 15 are formed between those parallel grooves. The separator plate 10 comprises, on the rear surface thereof, a gas flow channel for connecting the fuel gas manifold aperture 12a with the fuel gas manifold aperture 12b, or a cooling water flow channel for connecting the cooling water manifold aperture 13a with the cooling water manifold aperture 13b.

The separator plate 10 of the present embodiment differs from that of the conventional example in that a step as deep as the gas flow channel or the cooling water flow channel is provided on the periphery of each of the manifold apertures. Although the manifold aperture 11a is described below, the other manifold apertures have the same structures as the manifold aperture 11a.

A step 16 is formed on the cathode-side periphery of the manifold aperture 11a. This step is made as deep as the inlet side of the gas flow channel 14. Burrs 17 are formed on the cathode-side periphery of the manifold aperture 11a. The burrs are shown only on the cathode-side periphery of the manifold aperture 11a in the drawings; burrs formed in the other parts are omitted.

As thus described, in the separator plate of the present embodiment, the step 16 is formed between the oxidant gas manifold aperture 11a and the oxidant gas flow channel 14 so that the periphery of the aperture 11a is in a position one step lower. On this account, the oxidant gas can be supplied to the gas flow channel 14 with almost no obstruction even when burrs are formed on the periphery of the aperture 11a. By formation of a step similar to the step 16 on the periphery of the manifold aperture 11b, the gas as well as generated water can be discharged from the gas flow channel 14 to the manifold aperture 11b with almost no obstruction.

Further, with the formation of the step 16, the manifold aperture 11a communicates with the gas flow channel 14 through the step. Since there is no equivalent to rib 15 on the step 16, burrs 17 can readily be removed by grinding with the use of an automatic machine.

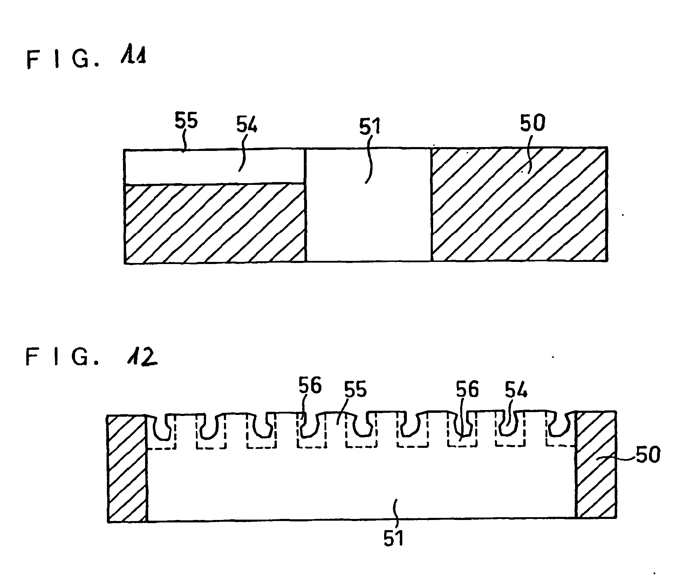

The above-mentioned advantages are obvious from comparisons between FIGS. 2 and 3, and FIGS. 13 and 14 showing a conventional example corresponding to FIGS. 2 and 3, respectively. In a separator plate 50 of the conventional example, an oxidant gas manifold aperture 51 directly communicates with an oxidant gas flow channel 54. The end of each of ribs 55 formed between the grooves of the gas flow channel is thus on the edge of the aperture 51, leading to formation of burrs 56 continuing to the end faces of the ribs 55 on the periphery of the aperture 51. As apparent from FIG. 14, the burrs 56 obstruct the supply of the gas from the aperture 51 to the gas flow channel 54 and the discharge of the gas and the generated water from the gas flow channel 54 side to the aperture 51 side.

According to the present reference example, such obstruction can be eliminated. The present example is particularly effective when a plurality of grooves that are mutually in parallel constitute a gas flow channel.

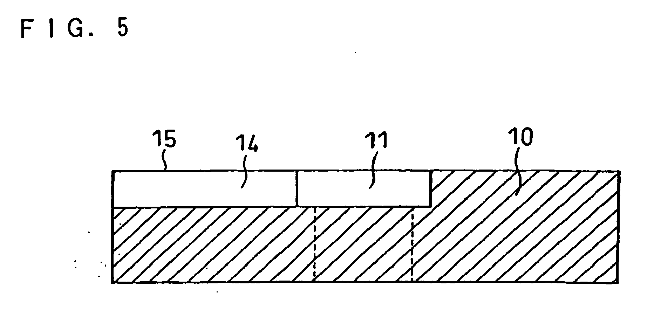

FIG. 5 shows an expanded sectional view of the separator plate of the present example after molding, taken along a line corresponding to the line II-II of FIG. 1.

As shown in FIG. 5, the separator plate of the present example is produced by press molding so as to comprise a concave part 11 slightly larger than a manifold aperture in a part where the manifold aperture is intended to be formed. The manifold aperture will be formed in the part indicated with the dotted lines in FIG. 5.

Herein, when the width of the step 16, namely a distance "t" between the end face of the rib 15 and the manifold aperture 11a is 0.01 mm or longer, the distance "t" can sufficiently exert the effect of eliminating the influence of the formed burrs. The distance "t" is preferably 0.1 mm or longer. Moreover, from the viewpoint of miniaturization of a fuel cell stack, the distance "t" is desirably 2 mm or shorter.

### Example 1

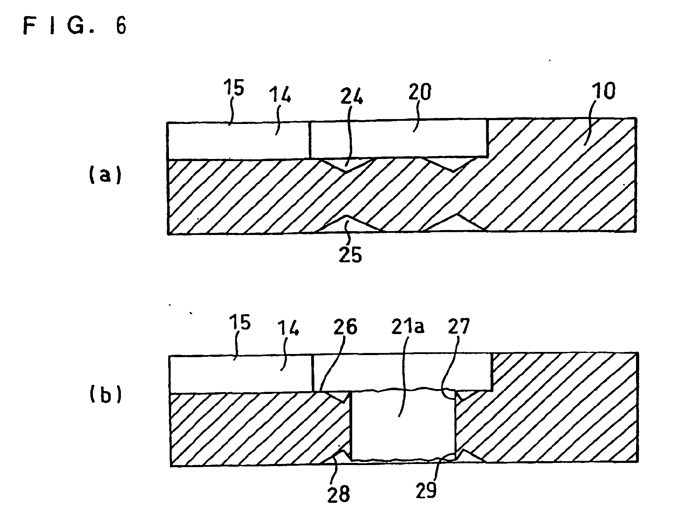

FIG. 6 shows an expanded sectional view, taken along a line corresponding to the line II-II of FIG. 1, for indicating production steps of a separator plate of the present example. FIG. 6(a) shows the separator plate after molding and FIG. 6(b) shows the separator plate after a manifold aperture has been punched out.

The separator plate of the present example is produced by press molding so as to comprise a concave part 20 slightly larger than a manifold aperture in a part where the manifold aperture is intended to be formed, as shown in FIG. 6(a), and then punching out a hole by means of a mold to form a manifold aperture, as shown in FIG. 6(b). In the molding, grooves 24 and 25, V-shaped at cross section, are formed together with the concave part 20 in the position where the manifold aperture is punched out. By punching out a hole in this position by means of a mold, a manifold aperture 21a is formed. Burrs 27 and 29 formed in punching out the aperture are also shown in FIG. 6(b).

In the present example, circulations of the gases and the generated water are easier because a taper for lowering the edge side of the aperture 21a is provided on the step 26 which connects the aperture 21a with the gas flow channel 14.

In the present example, since the molded separator plate comprises the grooves 25 in the part where the manifold aperture 21a is intended to be formed by punching out by means of a mold, a more excellent processing property can be obtained than that in the reference example.

### Example 2

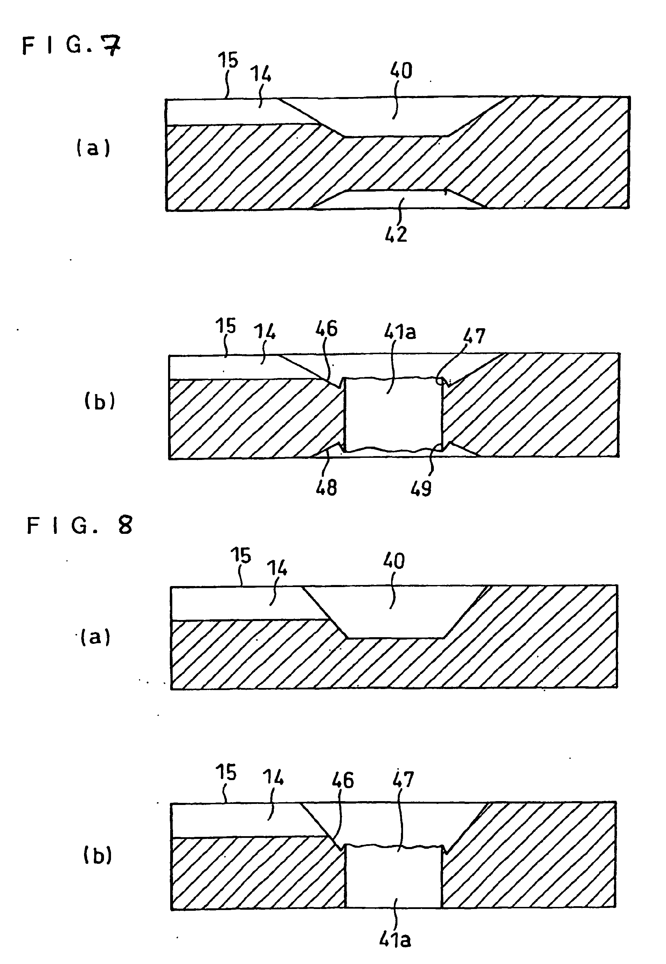

FIG. 7 shows an expanded sectional view, taken along a line corresponding to the line II-II of FIG. 1, for indicating production steps of a separator plate of the present example. FIG. 7 (a) shows the separator plate after molding and FIG. 7 (b) shows the separator plate after a manifold aperture has been punched out.

The separator plate of the present example is produced by press molding so as to comprise concave parts 40 and 42, which are slightly larger than a manifold aperture, respectively on both surfaces of a part where the manifold aperture is intended to be formed, as shown in FIG. 8(a), and then punching out a hole by means of a mold to form a manifold aperture 41a, as shown in FIG. 8(b). Since a taper is provided on the side wall of each of the concave parts 40 and 42 so as to make each of the opening sides of the aperture 41a wider, steps 46 and 48 provided with the tapers are formed, respectively, on the peripheries of the aperture 41a on both surfaces of the separator plate. Burrs 47 and 49 formed in punching out the aperture 41a are also shown in FIG. 8 (b).

FIG. 8 shows an expanded sectional view, taken along a line corresponding to the line II-II of FIG. 1, for indicating production steps of the separator plate in another example. FIG. 8 (a) shows the separator plate after molding and FIG. 8 (b) shows the separator plate after the manifold aperture has been punched out. In the example shown in FIG. 8, press molding is performed so as to comprise the concave part 40 slightly larger than the manifold aperture on one side, namely on the cathode side, of the part where the manifold aperture is intended to be formed, and then a hole is punched out by means of a mold to form the manifold aperture 41a.

In the present exemple, the step 46 provided with the taper is deeper than the gas flow channel 14. This can make the influence of the formed burrs 47 on the gas flow channel 14 smaller compared with the reference example. Moreover, the provision of the tapers on the steps 46 and 48 allows the molded body to have an improved releasing property from the mold. Further, making the thickness of the part where the manifold aperture is formed thinner enables facilitation of the punching-out process.

Although the inlet-side oxidant gas manifold aperture was described in the above examples, the same can be applied to the outlet-side oxidant gas manifold aperture.

Moreover, the same structure as the structure adopted in the above-mentioned oxidant gas manifold aperture can be applied to the fuel gas manifold aperture in terms of the part communicating with the fuel gas flow channel formed on the anode side of the separator plate, or to the cooling water manifold aperture in the part communicating with the cooling water flow channel.

### Example 3

In the present example described is a manifold of a fuel cell stack constituted by stacking membrane-electrode assemblies (MEAs) and separator plates comprising the manifold apertures as thus described.

Herein shown is an example of using a single separator plate which is produced by making the separator plate 10, comprising an oxidant gas flow channel on one surface thereof as shown in FIG. 1, comprise a fuel gas flow channel on the rear surface thereof, and thus serves as a cathode-side separator plate as well as an anode-side separator plate.

FIG. 9 is a front view of the anode-side of the separator plate 10. The separator plate 10 comprises, on the anode side, a fuel gas flow channel 4 so as to connect the manifold aperture 12a with the manifold aperture 12b. Numeral 5 shows ribs for partitioning the flow channel 4. A step 6 is provided on the periphery of the opening of each of the manifold apertures 12a and 12b.

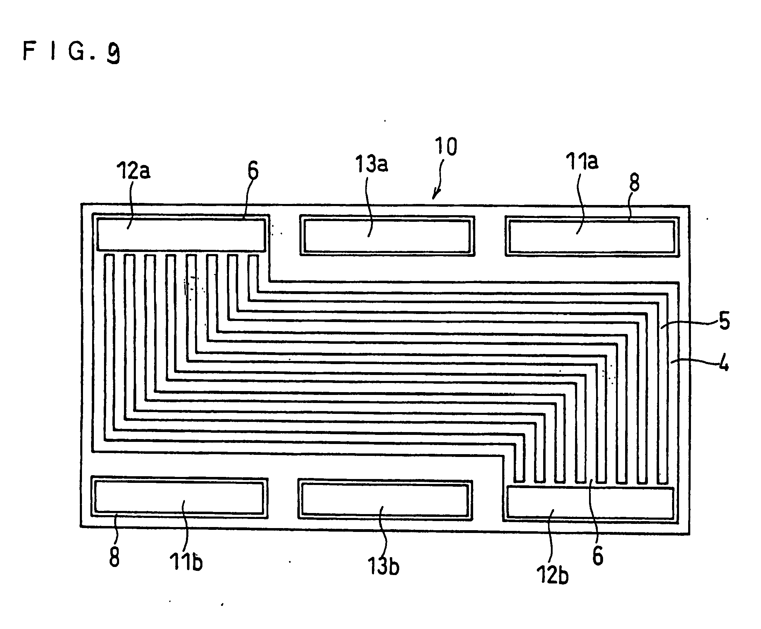

FIG. 10 is a sectional view showing a part of a fuel cell stack formed by alternately stacking the separator plates 10 and MEAs, taken along the line XII-XII of FIG. 1. Numeral 1 shows an MEA comprising a polymer electrolyte membrane, an anode and a cathode sandwiching the polymer electrolyte membrane, and gaskets sandwiching the polymer electrolyte membrane on the periphery of each of the anode and the cathode. In the fuel cell stack, an oxidant gas manifold is constituted by the manifold apertures 11a in the separator plates 10 and the manifold apertures in the MEAs. Further, the manifold aperture 11a has large-diameter parts and small-diameter parts since it comprises the steps 16 and 8 on the cathode side and the anode side, respectively. Hence the manifold, through which the oxidant gas flows straight, as indicated by the arrow A1, is constituted by the small-diameter parts D1 and the large-diameter parts D2. The arrow A2 indicates the oxidant gas branching from the flow indicated by the arrow A1 and flowing into the gas flow channel 14 in each cell, and the arrow A3 indicates the flow of an exhaust gas including a product of the cathode and an excess gas.

In the conventional fuel cell, a manifold, through which the oxidant gas indicated by the arrow A1 flows, has been constituted by manifold apertures having uniform diameters.

There are two types of flows of the oxidant gas which flows from the inlet of the fuel cell stack into the manifold: the one is a straight flow indicated by the arrow A1 and the other is a flow vertical to the flow indicated by the arrow A1, which branches into the gas flow channels 14 provided in the separator plates 10. When the gas flows at a uniform rate throughout the manifold, a uniform amount of the gas is supplied to each MEA; in practice, however, the gas amount decreases by the amount of the gas flowing into each of the gas flow channels 14 as the gas flows along the manifold, increasingly lowering the gas flow rate. This causes the flow rate on the reaction gas inlet side to be faster and the reaction gas outlet side to be slower when the manifold apertures have uniform equivalent diameters, as has been in the case of the conventional manifold. Such changes in flow rate lead to occurrence of variation in amount of the oxidant gas flowing into the gas flow channel 14 in each cell.

On the other hand, as in FIG. 10, provision of large diameter parts D2 and small diameter parts D1 within the manifold allows drastic lowering of the flow rate of the oxidant gas at each of the large diameter parts, thereby narrowing the variation in flow rate at the plural large diameter parts present within the manifold. With provision of a port for communicating with the gas flow channel 14 at each of the large diameter parts 12, the variation in amount of the gas flowing into the gas flow channel 14 can be reduced. It is therefore possible to provide a stably operatable fuel cell stack.

As thus described, the pressure-loss distribution of the reaction gas flowing in the vicinity of the plural gas flow channels within the manifold can be decreased by adjusting the difference in equivalent diameter between the large diameter part D2 and the small diameter part D1 to the extent that the flow rate of the reaction gas can practically be lowered at the large diameter parts D2.

Particular examples of the present invention are described below.

### EXAMPLE 3.1

First, a preparation method of an electrode comprising a catalyst layer is described. An acetylene black powder was allowed to carry 25 wt% of platinum particles having a mean particle size of about 30 Å, to give a catalyst of an electrode. The resultant catalyst powder was dispersed in isopropanol, which was then mixed with an ethyl alcohol dispersion of a perfluorocarbon sulfonic acid powder, to give a catalyst paste.

On the other hand, carbon non-woven fabric having outer dimensions of 16 cm × 20 cm and a thickness of 360 *µ*m (TGP-H-120, manufactured by Toray Industries, Inc.) was impregnated with an aqueous dispersion of a fluorocarbon resin (NEOFLON ND1, manufactured by DAIKIN INDUSTRIES, LTD.), and then dried and heated at 400°C for 30 minutes to be imparted with water repellency. The above-mentioned catalyst paste was applied onto one surface of the obtained carbon non-woven fabric by a screen-printing method to form a catalyst layer. At this time, a part of the catalyst layer was embedded in the carbon non-woven fabric. The carbon non-woven fabric with the catalyst layer formed thereon as thus produced was used as an electrode. The electrode contained platinum in an amount of 0.5 mg/cm² and perfluorocarbon sulfonic acid in an amount of 1.2 mg/cm².

Subsequently, a pair of electrodes were bonded by hot pressing onto each of the front and rear surfaces of a proton conductive polymer electrolyte membrane having outer dimensions of 20 cm × 32 cm in such a manner that each of the catalyst layers was brought into contact with the electrolyte membrane, to give an electrolyte membrane-electrode assembly (MEA). The proton conductive polymer electrolyte membrane used here was a 50 *µ*m thick thin film of perfluorocarbon sulfonic acid.

Next, a description is given to a conductive separator plate.

First, a mixture of 50 parts by weight of an artificial graphite powder (High purity graphite ACB, manufactured by Nippon Graphite Industries, Ltd) having a mean particle size of about 10 *µ*m, 30 parts by weight of fibrous graphite (Ketjen Black EC600JD, manufactured by LION CORPORATION) having a mean diameter of 50 *µ*m and a mean length of 0.5 mm, and 20 parts by weight of a thermosetting phenol resin (Sumilite Resin PR-51107, manufactured by Sumitomo Bakelite Company, Limited.) was kneaded with the use of an extrusion kneading machine, and the resultant kneaded powder was put into a mold for molding grooves for gas flow channels, grooves for a cooling water flow channel, and aimed manifold apertures, followed by hot pressing. The conditions for hot pressing were a mold temperature of 50°C, pressure of 100 kg/cm², and the time of 10 minutes. The obtained conductive separator plate had outer dimensions of 20 cm × 32 cm, a thickness of 1.3 mm, with each of the gas flow channels and the cooling water flow channel therein having a depth of 0.5 mm. The mold used here was made of an alloy tool for a hot mold (SKD8), and processed on conditions that the flow channel had a groove width of 1.5 mm ± 5 *µ*m, a groove depth of 0.5 mm ± 5 *µ*m and a pitch of 3 mm ± 5 *µ*m, and the separator plate had a thickness of 1.3 mm, a flatness of 10 *µ*m, and a surface polish rate of 0.8 S (maximum surface roughness).

After this manner, a separator plate having such a structure as shown in FIG. 1 was produced. As shown in FIG. 6(b), burrs 27 were formed on the cathode-side periphery of the manifold aperture 21a formed by punching-out by means of a mold after press molding. The heights of the burrs were 0.01 to 0.20 mm. This separator plate is referred to as a separator plate 2A. Further, burrs formed on the periphery of the manifold aperture in the separator plate formed in the above-mentioned manner were removed with the use of a grinder. The heights of the burrs were thereby made 0.01 mm or lower. This separator plate is referred to as a separator plate 2B.

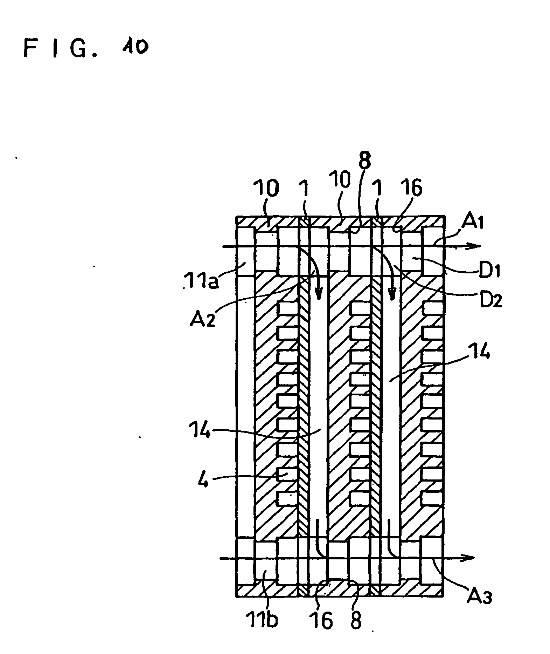

As a comparative example, a separator plate was produced using the same material and under the same pressing conditions, by means of a mold which makes an obtained separator plate comprise a gas flow channel in the same shape as the above and a manifold aperture whose cross section was shaped as in FIG. 11. As shown by numeral 56 in FIG. 12, burrs formed on the periphery of the manifold aperture 51 were 0.01 to 0.10 mm high. This is referred to as COMPARATIVE EXAMPLE A. Further, burrs formed on the periphery of the manifold aperture in the separator plate produced in the above-mentioned manner were ground. Since the burrs could not be ground with the use of an automatic machine due to the complex shape of the part where the burrs were formed, the grinding was performed by hand with the use of a file. This process made the heights of the burrs 0.01 mm or lower. This is referred to as COMPARATIVE EXAMPLE B.

Next, cooling water manifold apertures, fuel gas manifold apertures and oxidant gas manifold aperture were formed in the hydrogen-ion conductive polymer electrolyte membrane of the MEA above formed. These apertures were of the same sizes and provided in the same positions as those in the separator plate shown in FIG. 1.

The MEA sheet was sandwiched between two of the separator plates of the same kind, as thus produced, to give a unit cell. 100 of such unit cells were stacked, with a cooling section provided for every 2 cells, to produce a cell stack. The cooling section was formed by not inserting a single separator plate having an oxidant gas flow channel on one surface thereof and a fuel gas flow channel on the other surface thereof, but inserting a composite separator plate composed of: a cathode-side separator plate comprising an oxidant gas flow channel on one surface thereof and a cooling water flow channel on the other surface thereof; and an anode-side separator plate comprising a fuel gas flow channel on one surface thereof and a cooling water flow channel on the other surface thereof. This composite separator plate was formed by bonding the cathode-side separator plate to the anode-side separator plate in such a manner that the surface, with the cooling water flow channel formed thereon, of each of the two separator plates were mutually opposed. On each end of this cell stack, a current collector plate made of stainless steel, an insulating plate made of an electrically insulating material and an end plate were stacked, and both end plates were then cramped with cramping rods. The cramping pressure at that time was 15 kgf / cm² (14,7 x 10⁵ Pa) per the area of the separator plate.

The polymer electrolyte fuel cells of EXAMPLES and COMPARATIVE EXAMPLES as thus fabricated were kept at 80°C, and a hydrogen gas humidified and heated to have a dew point of 75°C and air humidified and heated to have a dew point of 65°C were supplied to the anode side and the cathode side, respectively. This resulted in a cell open-circuit voltage of 96 V at the time of no load when no current was output to the outside. Further, after the continuous power generation test, it was confirmed that the output of the cells using separators 2A and 2B, respectively, were all kept at about 14 kW (62 V - 224 A) over 8000 hours or longer. It was also confirmed that the similar cell characteristics could be obtained even when the cross section of the periphery of the manifold aperture became a curved face by grinding the burrs.

### EXAMPLE 3.2

In the present example, a separator plate was produced in the same manner as in EXAMPLE 3.1 except for a manifold aperture. As shown in FIG. 7(b), burrs 47 were formed on the cathode-side periphery of the manifold aperture 41a formed by punching-out by means of a mold after press molding. The heights of the burrs were 0.01 to 0.20 mm. This separator plate is referred to as a separator plate 4A. Further, burrs formed on the periphery of the manifold aperture in the separator plate formed in the above-mentioned manner were removed with the use of a grinder. The heights of the burrs were thereby made 0.01 mm or lower. This separator plate is referred to as a separator plate 4B.

Using these separator plates, polymer electrolyte fuel cells were fabricated in the same manner as in EXAMPLE 3.1 and operated under the same conditions as EXAMPLE 3.1. This resulted in a cell open-circuit voltage of 96 V at the time of no load when no current was output to the outside. Further, after the continuous power generation test, it was confirmed that the output of the cells using separators 4A and 4B, respectively, were all kept at about 14 kW (62 V - 224 A) over 8000 hours or longer.

As specifically described above, according to the present invention, in production of a separator, using a composite material of expanded graphite or graphite and a resin that can be processed by molding lower in cost than cutting or grinding, a removal step of burrs formed in molding is unnecessary or removal of the burrs with the use of an automatic machine is possible, so that a substantial reduction in cost in mass production can be attempted.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A polymer electrolyte fuel cell comprising:
a plurality of membrane-electrode assemblies which comprise a polymer electrolyte membrane (1), and an anode and a cathode, sandwiching said polymer electrolyte membrane therebetween;
a plurality of conductive separator plates (10) stacked alternately with said membrane-electrode assemblies, said conductive separator plate having an anode-facing surface on one side and a cathode-facing surface on the other side; and
a gas supply and discharge means for supplying and discharging a fuel gas to and from said anode and for supplying and discharging an oxidant gas to and from said cathode,
wherein said gas supply and discharge means includes: a pair of fuel gas manifold apertures (12a, 12b) and a pair of oxidant gas manifold apertures (11a, 11b), which are provided in said membrane-electrode assemblies and said conductive separator plates in common; a fuel gas flow channel comprising grooves provided so as to connect one of the fuel gas manifold apertures with the other of the fuel gas manifold apertures in said anode-facing surface of said conductive separator plate; and an oxidant gas flow channel (14) comprising grooves provided so as to connect one of said oxidant gas manifold apertures with the other of said oxidant gas manifold apertures in said cathode-facing surface of said conductive separator plate, **characterized in that** a step (16; 26; 46) deeper than said gas flow channel (14) is provided on the whole periphery of each of said manifold apertures (21a; 41a) in said conductive separator plate (10) and said oxidant gas manifold apertures (11a, 11b) are constituted by a small-diameter part (D1) and a large-diameter part (D2), respectively.

2. The polymer electrolyte fuel cell according to claim 1, wherein said step is a tapered step (26; 46).

3. The polymer electrolyte fuel cell in accordance with Claim 1 or 2, wherein burrs (17) on the gas-flow-channel-side periphery of said manifold aperture in said conductive separator plate have been removed.

4. A method for producing a conductive separator plate for a fuel cell comprising:
a first step for molding a mixture which comprises a graphite powder and a binder to form a plate; and
a second step for forming manifold apertures (21; 41) in the plate by machining,
wherein said first step is performed such that a gas flow channel comprising grooves, as well as a concave part (20; 40) slightly larger than said manifold aperture is formed in the plate, and said second step is performed such that a step (16; 26; 46) deeper than said gas flow channel (14) is formed on the whole periphery of said manifold aperture and said oxidant gas manifold apertures (11a, 11b) are constituted by a small-diameter part (D1) and a large-diameter part (D2), respectively.

5. The method for producing a conductive separator plate according to claim 4, wherein said step is formed as a tapered step (26; 46) .

6. The method for producing a conductive separator plate for a fuel cell in accordance with claim 4 or 5, further comprising a step for removing burrs formed on the periphery of said manifold aperture.

## Patentansprüche

1. Polymerelektrolytbrennstoffzelle, mit:
einer Vielzahl von Membran-Elektroden-Einheiten, die eine Polymerelektrolytmembran (1) und eine die Polymerelektrolytmembran von beiden Seiten umgebende Anode und Kathode umfassen;
einer Vielzahl abwechselnd mit den Membran-Elektroden-Einheiten aufgestapelter leitender Separatorplatten (10), die jeweils eine anodenseitige Fläche auf einer Seite und eine kathodenseitige Fläche auf der anderen Seite haben; und
einer Gaszufuhr- und -abfuhreinrichtung zum Zuführen und Abführen eines Brennstoffgases zu und von der Anode und zum Zuführen und Abführen eines Oxidationsmittelgases zu und von der Kathode,
wobei die Gaszufuhr- und -abfuhreinrichtung Folgendes beinhaltet: ein Paar Brennstoffgasverteileröffnungen (12a, 12b) und ein Paar Oxidationsmittelgasverteileröffnungen (11a, 11b), die gemeinsam in den Membran-Elektroden-Einheiten und den leitenden Separatorplatten vorgesehen sind; einen Brennstoffgasströmungskanal mit Nuten, die so vorgesehen sind, dass sie eine der Brennstoffgasverteileröffnungen mit der anderen der Brennstoffgasverteileröffnungen in der anodenseitigen Fläche der leitenden Separatorplatte verbinden; und einen Oxidationsmittelgasströmungskanal (14) mit Nuten, die so vorgesehen sind, dass sie eine der Oxidationsmittelgasverteileröffnungen mit der anderen der Oxidationsmittelgasverteileröffnungen in der kathodenseitigen Fläche der leitenden Separatorplatte verbinden,
**dadurch gekennzeichnet, dass**
auf dem gesamten Rand jeder der Verteileröffnungen (21a; 41a) in der leitenden Separatorplatte (10) eine Stufe (16; 26; 46) vorgesehen ist, die tiefer als der Gasströmungskanal (14) ist, und sich die Oxidationsmittelgasverteileröffnungen (11a, 11b) jeweils aus einem Teil kleinen Durchmessers (D1) und einem Teil großen Durchmessers (D2) zusammensetzen.

2. Polymerelektrolytbrennstoffzelle nach Anspruch 1, bei der die Stufe eine sich verjüngende Stufe (26; 46) ist.

3. Polymerelektrolytbrennstoffzelle nach Anspruch 1 oder 2, bei der Grate (17) auf dem gasströmungskanalseitigen Rand der Verteileröffnung in der leitenden Separatorplatte entfernt worden sind.

4. Verfahren zur Herstellung einer leitenden Separatorplatte für eine Brennstoffzelle, mit:
einem ersten Schritt zum Formen eines Gemisches, das ein Graphitpulver und ein Bindemittel umfasst, um eine Platte zu bilden; und
einem zweiten Schritt zum Bilden von Verteileröffnungen (21; 41) in der Platte durch maschinelle Bearbeitung,
wobei der erste Schritt so erfolgt, dass in der Platte ein Gasströmungskanal mit Nuten und auch ein konkaver Teil (20; 40), der etwas größer als die Verteileröffnung ist, gebildet werden, und der zweite Schritt so erfolgt, dass auf dem gesamten Rand der Verteileröffnung eine Stufe (16; 26; 46) gebildet wird, die tiefer als der Gasströmungskanal (14) ist, und sich die Oxidationsmittelgasverteileröffnungen (11a, 11b) jeweils aus einem Teil kleinen Durchmessers (D1) und einem Teil großen Durchmessers (D2) zusammensetzen.

5. Verfahren zur Herstellung einer leitenden Separatorplatte nach Anspruch 4, bei dem die Stufe als eine sich verjüngende Stufe (26; 46) ausgebildet wird.

6. Verfahren zur Herstellung einer leitenden Separatorplatte für eine Brennstoffzelle nach Anspruch 4 oder 5, mit außerdem einem Schritt zum Entfernen von auf dem Rand der Verteileröffnung ausgebildeten Graten.

## Revendications

1. Pile à combustible à électrolyte polymère comprenant :
une pluralité d'assemblages membrane-électrode qui comprennent une membrane d'électrolyte polymère (1) et une anode et une cathode, insérées entre ladite membrane d'électrolyte polymère entre celle-ci ;
une pluralité de plaques de séparation conductrices (10) empilées alternativement avec lesdits assemblages membrane-électrode, ladite plaque de séparation conductrice ayant une surface tournée vers l'anode d'un côté et une surface tournée vers la cathode de l'autre côté ; et
un moyen d'alimentation et de décharge de gaz pour alimenter et décharger un gaz combustible dans et hors de ladite anode et pour alimenter et décharger un gaz oxydant dans et hors de ladite cathode,
dans laquelle ledit moyen d'alimentation et de décharge de gaz comprend : une paire d'ouvertures d'admission de gaz combustible (12a, 12b) et une paires d'ouvertures d'admission de gaz oxydant (11a, 11b), qui sont placées dans lesdits assemblages membrane-électrode et dans lesdites plaques de séparation conductrices en commun ; un tunnel d'écoulement de gaz combustible comprenant des rainures placées de façon à relier l'une des ouvertures d'admission de gaz combustible avec l'autre des ouvertures d'admission de gaz combustible à ladite surface tournée vers l'anode de ladite plaque de séparation conductrice ; et un tunnel d'écoulement de gaz oxydant (14) comprenant des rainures placées de façon à relier l'une desdites ouvertures d'admission de gaz oxydant avec l'autre desdites ouvertures d'admission de gaz oxydant à ladite surface tournée vers la cathode de ladite plaque de séparation conductrice ; **caractérisé en ce qu'**une marche (16, 26, 46) plus profonde que ledit tunnel d'écoulement de gaz (14) est placée sur toute la périphérie de chacune desdites ouvertures d'admission (21a, 41a) dans ladite plaque de séparation conductrice (10) et lesdites ouvertures d'admission de gaz oxydant (11a, 11b) sont constituées respectivement d'une partie de faible diamètre (D1) et d'une partie de gros diamètre (D2).

2. Pile à combustible à électrolyte polymère selon la revendication 1, dans laquelle ladite marche est une marche effilée (26, 46).

3. Pile à combustible à électrolyte polymère selon la revendication 1 ou 2, dans laquelle des ébarbures (17) du côté de la périphérie du tunnel d'écoulement de gaz de ladite ouverture d'admission dans ladite plaque de séparation conductrice ont été éliminées.

4. Procédé de production d'une plaque de séparation conductrice pour une pile à combustible, comprenant :
une première étape consistant à mouler un mélange qui comprend une poudre de graphite et un liant pour former une plaque ; et
une deuxième étape consistant à former des ouvertures d'admission (21, 41) dans la plaque par usinage,
dans lequel ladite première étape est réalisée de telle sorte que le tunnel d'écoulement de gaz comprenant des rainures, ainsi qu'une partie concave (20, 40) légèrement plus large que ladite ouverture d'admission, soient formés dans la plaque, et ladite deuxième étape est réalisée de telle sorte que qu'une marche (16, 26, 46) plus profonde que ledit tunnel d'écoulement de gaz (14) soit formé sur toute la périphérie de ladite ouverture d'admission et lesdites ouvertures d'admission de gaz oxydant (11a, 11b) sont constituées respectivement d'une partie de faible diamètre (D1) et d'une partie de gros diamètre (D2).

5. Procédé de production d'une plaque de séparation conductrice selon la revendication 4, dans lequel ladite marche est formée sous forme d'une marche effilée (26, 46).

6. Procédé de production d'une plaque de séparation conductrice pour une pile à combustible selon la revendication 4 ou 5, comprenant en outre une étape d'élimination des ébarbures formées à la périphérie de ladite ouverture d'admission.
